Europäisches Patentamt

European Patent Office

Office européen des brevets

(11) Numéro de publication : **0 360 693 B1**

(12) **FASCICULE DE BREVET EUROPEEN**

(45) Date de publication du fascicule du brevet :
**05.08.92 Bulletin 92/32**

(51) Int. Cl.$^5$ : **G01N 3/42**

(21) Numéro de dépôt : **89402586.5**

(22) Date de dépôt : **21.09.89**

(54) **Dispositif de mesure de la compacité d'un objet déformable.**

(30) Priorité : **23.09.88 FR 8812444**

(43) Date de publication de la demande :
**28.03.90 Bulletin 90/13**

(45) Mention de la délivrance du brevet :
**05.08.92 Bulletin 92/32**

(84) Etats contractants désignés :
**DE FR GB**

(56) Documents cités :
**EP-A- 0 195 173**
**DE-A- 3 432 839**
**FR-A- 2 595 824**
**GB-A- 2 047 900**
**US-A- 3 691 823**

(73) Titulaire : **SOCIETE NATIONALE
D'EXPLOITATION INDUSTRIELLE DES
TABACS ET ALLUMETTES Société Anonyme
française
53, quai d'Orsay
F-75340 Paris Cédex 07 (FR)**

(72) Inventeur : **Cholet, Georges
12 Sentier de Souhait
F-45000 Orléans (FR)**
Inventeur : **Delafoy, Jean-Alain
3 rue des Bleuets
Gidy F-45400 Fleury-les-Aubrais (FR)**
Inventeur : **Rousseau, Alain
19 rue Darsonval
F-45100 Orléans (FR)**

(74) Mandataire : **Bloch, Gérard et al
2, square de l'Avenue du Bois
F-75116 Paris (FR)**

Jouve, 18, rue Saint-Denis, 75001 PARIS

## Description

La présente invention a pour objet un dispositif de mesure de la compacité d'un objet déformable, comprenant :

– une paire de mâchoires entre lesquelles est maintenu ledit objet,

– des moyens pour écraser, par l'intermédiaire desdites mâchoires et sous l'action d'une force calibrée, ledit objet, et,

– des moyens de détermination du déplacement relatif desdites mâchoires qui résulte de l'écrasement dudit objet, et repésentatif de la compacité à mesurer.

Un tel dispositif est utilisé en particulier dans l'industrie des tabacs, pour mesurer la compacité des cigarettes, cigares, et objets analogues.

Dans le cas de tels objets, déformables mais d'élasticité imparfaite, il importe que la force d'écrasement soit calibrée en intensité et en durée, de façon à ce que la mesure de la déformation qui en résulte soit effectivement représentative de la compacité de l'objet à mesurer.

On connaît déjà des dispositifs du type défini ci-dessus, pour la mesure de la compacité de cigarettes ou d'articles analogues. Dans ces dispositifs, les deux mâchoires sont disposées l'une au dessus de l'autre, et de telle façon que la cigarette soit maintenue horizontale. La force calibrée est exercée par une masse déterminée, par exemple de 450 g, dont le poids est appliqué, pendant une durée déterminée, par exemple de 10 s, à la mâchoire supérieure. Ces dispositifs souffrent notamment d'un inconvénient lié à la position horizontale de la cigarette, qui rend difficile l'utilisation du dispositif dans une chaîne de dispositifs où la cigarette se déplace, d'un dispositif à l'autre, par gravité, et en restant toujours verticale. De façon connue, une telle chaîne comprend une succession de dispositifs de mesure, par exemple un dispositif de pesée, un dispositif de mesure de tirage et de ventilation, un dispositif de mesure de diamètre, et ainsi de suite. Ces différents dispositifs sont disposés les uns en dessous des autres, et chacun est agencé pour que sa mesure soit effectuée sur la cigarette disposée verticalement, celle-ci pénétrant par le haut dans le poste de mesure, et en ressortant par le bas. Dans ce cas, le trajet de la cigarette, d'un bout à l'autre de la chaîne, est une droite verticale. Ainsi sont évités de complexes et coûteux systèmes d'acheminement de la cigarette d'un poste à l'autre, et aussi une perte de temps entre un poste et l'autre. Un dispositif de mesure de compacité dans lequel la cigarette doit être horizontale ne peut donc être inséré dans une telle chaîne qu'au prix de l'utilisation d'un système pour faire passer la cigarette de la position verticale à la position horizontale, pour la déposer sur les mâchoires, la reprendre après mesure, et la remettre en position verticale. L'utilisation d'un tel système annule alors une bonne partie des avantages de la chaîne à déplacement longitudinal vertical des cigarettes.

On connaît également un dispositif décrit dans le document DE-A-3 432 839, dans lequel les mâchoires sont entraînées en déplacement l'une vers l'autre à l'aide d'un moteur. Il est prévu un capteur pour mesurer la force d'écrasement, et un circuit de commande du moteur, recevant le signal de sortie du capteur, et agencé pour que la force d'écrasement reste à tout instant égale à une valeur de consigne calibrée. Dans ce dispositif, l'objet dont la compacité est à mesurer, ici encore une cigarette, est rendu solidaire, avant, pendant et après la mesure de compacité, d'un dispositif de maintien, en l'occurrence en forme de carrousel, qui permet d'effectuer, à cadence rapide, des mesures sur une pluralité de cigarettes. Le carrousel comprend un disque horizontal dont la périphérie est munie d'une pluralité d'orifices, chaque orifice étant notamment destiné au maintien d'une cigarette dans la direction radiale correspondante.

La paire de mâchoires du dispositif de mesure de compacité est monté pivotante dans un plan vertical qui passe par le centre du disque. Pendant la mesure proprement dite, la paire de mâchoires se trouve dans le plan horizontal du disque et les mâchoires sont déplacées dans ce plan horizontal pour enserrer la cigarette mesurée. Dès que la mesure est terminée, les mâchoires se dessèrent, puis pivotent simultanément hors du plan horizontal du disque, pour permettre, par entraînement du disque sur un angle égal à celui qui sépare deux cigarettes successives, l'évacuation de la cigarette dont la compacité vient d'être mesurée et la mise en place de la cigarette suivante. La paire de mâchoires pivote alors pour revenir dans le plan horizontal, où la mesure recommence, par entraînement de chacune des mâchoires dans ce plan.

Ce dispositif présente notamment l'inconvénient suivant :

afin que l'axe de la cigarette ne subisse aucune déformation pendant la mesure, il est nécessaire que les mâchoires, au moment où elles enserrent la cigarette, restent symétriques l'une de l'autre par rapport à l'axe de la cigarette dont la position est imposée par le carrousel. Ceci complique le mécanisme d'entraînement des mâchoires, implique un calage de ce dernier par rapport au carrousel, et donc une surveillance périodique de la valeur correcte de ce calage. De plus, ceci impose pratiquement l'utilisation, pour entraîner les mâchoires en déplacement, d'un moteur rotatif à arbre fileté qui entraîne chacune des mâchoires par coopération avec un trou taraudé. En effet, l'utilisation d'un moteur linéaire, ou d'un vérin électromagnétique imposerait celle d'un dispositif mécanique complexe de symétrisation des déplacements de l'unique pièce motrice mobile en translation.

La présente invention vise à pallier les inconvénients précédents.

A cet effet, elle a pour objet un dispositif du type défini ci-dessus, caractérisé par le fait qu'une desdites mâchoires est pourvue d'au moins un orifice aspirant pour immobiliser ledit objet quelle que soit son orientation.

Dans ce cas, comme l'objet est maintenu, pendant la mesure, par une des mâchoires elles-mêmes, il n'est pas nécessaire de le maintenir extérieurement, et l'objet ne subit aucune contrainte extérieure, même si, sous l'effet du déplacement des mâchoires pendant la mesure, il est amené à se déplacer. Il est donc possible d'utiliser des mâchoires dont une est fixe et l'autre mobile, par exemple. Ainsi, on peut utiliser, pour déplacer les mâchoires l'une par rapport à l'autre, un moteur linéaire ou un vérin, par exemple, sans nécessité d'utiliser un mécanisme complexe de symétrisation des déplacements. De plus, la mesure du déplacement peut s'en trouver simplifiée.

De plus, le dispositif peut être très facilement utilisé avec l'objet en position verticale, sans que son immobilisation avant la mesure proprement dite ne soit une source de déformation parasite.

Avantageusement, lesdits moyens d'écrasement comprennent :

– des moyens commandables d'entraînement d'une desdites mâchoires en déplacement relatif par rapport à l'autre,
– des moyens de mesure de la force appliquée audit objet, et,
– des moyens de commande desdits moyens d'entraînement en réponse auxdits moyens de mesure de la force, agencés pour que celle-ci reste à tout instant égale à une valeur de consigne calibrée.

Avantageusement encore, lesdits moyens de mesure de la force comprennent un capteur de force qui supporte une desdites mâchoires.

Dans la forme de réalisation préférée, lesdits moyens d'entraînement comprennent un électro-aimant à commande proportionnelle, pourvu d'une tige mobile rappelée par un ressort.

Une telle réalisation est à la fois précise et d'un prix de revient faible.

Dans une autre forme de réalisation, lesdits moyens d'entraînement comprennent un moteur pas à pas, et lesdits moyens de détermination du déplacement relatif comprennent des moyens pour compter les pas dudit moteur, pour déterminer, le cas échéant, la déformation desdits moyens de mesure de la force, et pour calculer ledit déplacement relatif.

Dans ce cas, il n'est pas nécessaire de prévoir un capteur de déplacement.

La présente invention sera mieux comprise grâce à la description suivante de la forme de réalisation préférée, et d'une de ses variantes, du dispositif de mesure de compacité de l'invention, faite en se référant aux dessins annexés, sur lesquels,

– la figure 1 représente une vue de dessus, en coupe partielle, du dispositif de l'invention, dans lequel l'objet à mesurer est en position verticale,
– la figure 2 représente une vue de face du dispositif de la figure 1, sur lequel la plaque et la mâchoire frontales ont été supprimées, et,
– la figure 3 représente une vue de dessus, en coupe partielle, d'une variante du dispositif de la figure 1.

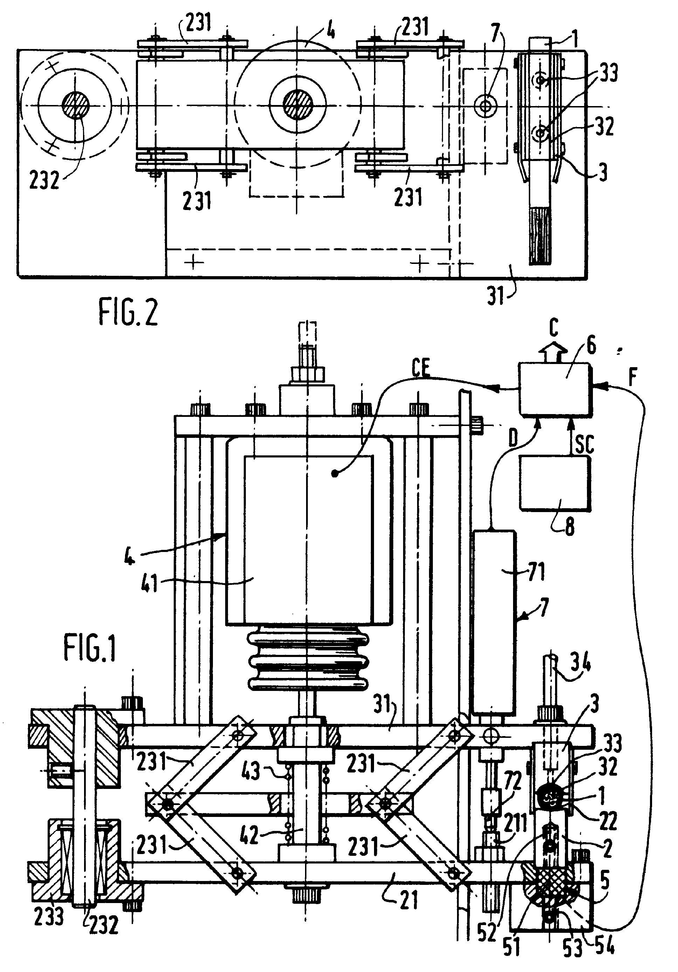

En se référant à la figure 1, un dispositif de mesure de la compacité d'une cigarette, d'un filtre pour cigarette ou d'autres articles analogues, est maintenant décrit.

Le dispositif comprend tout d'abord une paire de mâchoires 2 et 3 pour maintenir l'article ou objet à mesurer, en l'occurrence une cigarette 1.

La première mâchoire 3 est solidaire d'un châssis 31, et elle comporte une gorge 32 dont la section a la forme d'une portion de cercle adaptée pour recevoir la cigarette 1. La gorge 32 est ici verticale. Elle est pourvue, le long de sa génératrice centrale, de deux orifices 33 également visibles sur la figure 2, et reliés, par l'intermédiaire d'un conduit 34, a une pompe aspirante non représentée.

En face de la première mâchoire 3 est disposée une deuxième mâchoire 2, ou mâchoire frontale, encore appelée fouloir.

La mâchoire frontale 2 est pourvue d'une gorge 22, verticale comme la gorge 32, et dont la section a la forme d'une portion de cercle, ici de diamètre sensiblement plus grand que celui de la cigarette 1. Le plan de symétrie de la gorge 22 est le même que celui de la gorge 32. La mâchoire frontale 2 est supportée par un capteur de force 5, lui-même solidaire d'une plaque frontale mobile 21.

Ici le capteur de force 5 est un capteur à jauges de contrainte, de type connu. Il comprend un corps sensible 51 agencé pour mesurer la force exercée entre deux tiges filetées 52 et 53 qui en sont solidaires. Ici, la tige filetée 52 est vissée dans la mâchoire frontale 2, et la tige filetée 53 est vissée dans un élément massif 54 solidaire de la plaque frontale 21.

La plaque frontale 21 est reliée au châssis 31 par l'intermédiaire d'un ensemble de bras articulés 231. Un système de guidage de la plaque frontale 21 comprend une tige horizontale 232, solidaire du châssis 31, sur laquelle coulisse un manchon 233, solidaire de la plaque 21. La direction de la tige 232 est contenue dans le plan de symétrie vertical des gorges 22 et 32.

Un électro-aimant 4, à commande proportionnelle, est pourvu d'un corps 41 solidaire du châssis 31, et d'une tige mobile 42, solidaire de la plaque frontale 21. Un ressort de rappel 43, ici hélicoïdal et disposé autour de la tige mobile 42, exerce sur la plaque frontale 21 une force tendant à l'éloigner du châssis 31.

Un capteur de déplacement 7 est pourvu d'un corps 71 solidaire du châssis 31, et d'une tige mobile 72, en appui contre une butée 211 solidaire de la plaque frontale 21. Le capteur de déplacement est ici du type commercialisé par la Société HAIDEN HAIN METRO sous la référence MT 12.

Un circuit électronique 6 est pourvu de trois entrées recevant des signaux électriques D, F et SC, en provenance respectivement du capteur de déplacement 7, du capteur de force 5 et d'un générateur 8 du signal SC, ou signal de consigne.

Le circuit électronique 6 est pourvu de deux sorties. La première sortie délivre à l'électro-aimant 4 un signal de commande CE, et la deuxième délivre un signal C représentatif de la compacité C mesurée. Le signal C est destiné à commander un dispositif d'affichage non représenté, par exemple, ou encore à être mémorisé dans la mémoire d'un calculateur non représenté.

Le circuit électronique 6 comprend un circuit d'asservissement de type connu, pour commander l'électro-aimant 4, par l'intermédiaire du signal de commande CE, de façon à annuler la différence entre les signaux SC et F. Il comprend également un circuit pour convertir le signal D de mesure du déplacement en le signal C représentatif de la compacité. La conception d'un circuit comme le circuit électronique 6 est donc à la portée d'un homme de métier, et ce circuit ne sera donc pas davantage décrit.

Le générateur 8 de signal de consigne est agencé pour engendrer un signal de consigne SC dont la valeur est calibrée en intensité et en durée. Le générateur 8 peut délivrer systématiquement un signal de consigne dont les paramètres ont été choisis une fois pour toutes, mais il peut, avantageusement, être commandable, ou programmable, par l'intermédiaire d'organes de commande, d'un clavier, ou de signaux de commande. La conception d'un générateur comme le générateur 8 est donc à la portée d'un homme de métier, et ce générateur ne sera donc pas davantage décrit.

Le dispositif qui vient d'être décrit fonctionne comme cela va maintenant être décrit.

Tout d'abord, la cigarette 1 est introduite manuellement, ou à l'aide de dispositifs connus et non représentés dans un souci de simplicité, entre les mâchoires 2 et 3. La pompe aspirante non représentée est mise en marche, et la cigarette 1 est immobilisée contre la mâchoire 3 sous l'effet de l'aspiration d'air par les orifices aspirants 33. On notera que, ainsi, la cigarette est immobilisée entre les mâchoires 2 et 3 sans risque de déformation parasite qui pourrait fausser le résultat de la mesure ultérieure.

Ensuite, le générateur 8 est programmé pour que la valeur de consigne calibrée représentée par le signal SC corresponde, par exemple, à une force d'intensité 4,415 N appliquée pendant une durée de 10 secondes.

Dès qu'il reçoit le signal de consigne SC, le circuit électronique 6 commande l'électro-aimant 4, qui entraîne la mâchoire frontale 2 en déplacement relatif par rapport à la mâchoire 3, en réponse au signal F et de façon à ce que celui-ci reste à tout instant égal au signal SC. A cet effet, et de façon connue, le circuit électronique 6 est agencé pour comparer le signal F au signal SC, et pour réduire d'autant plus le courant de commande de l'électro-aimant 4 que le signal F est supérieur au signal SC, et inversement. L'électro-aimant 4 étant agencé pour rapprocher les mâchoires 2 et 3, contre la force de rappel du ressort 42, lorsque son courant de commande augmente, il en résulte pratiquement l'égalité, à tout instant, de la force effectivement appliquée à la cigarette 1, représentée par le signal F en sortie du capteur de force 5, avec la valeur de consigne calibrée. Ainsi, l'électro-aimant 4, le capteur de force 5 et le circuit électronique 6 coopèrent pour écraser, par l'intermédiaire des mâchoires 2 et 3, la cigarette 1, sous l'action d'une force calibrée.

Lorsque la durée calibrée, ici égale à 10 s, s'est écoulée, le circuit électronique détermine, en réponse au signal D en sortie du capteur de déplacement 7, le déplacement relatif des mâchoires 2 et 3 résultant de l'écrasement de la cigarette 1 sous l'action de la force calibrée, représentatif de la compacité à mesurer, et élabore le signal C en conséquence. Ici, le déplacement relatif des mâchoires représente la variation du signal D pendant les 10 secondes d'application de la force de 4,415 N.

Le circuit électronique 6 commande ensuite l'électro-aimant 4 pour que la mâchoire frontale 2 s'écarte de la cigarette 1. La pompe aspirante est arrêtée, afin que la cigarette 1 se trouve évacuée sous l'effet de son poids.

On notera ici que la position verticale de la cigarette 1 est un avantage important qui, comme cela a d'ailleurs déjà été expliqué, permet d'insérer le dispositif dans une châine de postes successifs dans lequel la cigarette se déplace d'un poste à l'autre en position verticale et sous l'effet de son propre poids, c'est-à-dire le long d'une droite verticale.

Naturellement, ce type de fonctionnement n'est pas le seul possible. En particulier, il est évidemment possible de changer l'intensité et la durée de la force appliquée à la cigarette, ou même de prévoir plusieurs paliers dans les variations d'amplitude de la force calibrée. Ainsi, et à titre d'exemple, on peut prévoir d'appliquer pendant un bref intervalle de temps une charge de faible valeur, ou "pré-charge", par exemple 0,294 N, avant l'application de la force de 4,415 N qui vient d'être décrite.

On peut aussi, au lieu d'appliquer une force d'intensité déterminée pendant une durée déterminée, appliquer cette force d'intensité déterminée jusqu'à ce que la pente de la courbe représentant l'évolution du déplacement relatif des mâchoires au cours du temps soit inférieure à un seuil déterminé. Dans ce cas, le circuit électronique 6 est agencé pour déterminer cet instant, en réponse au signal D.

Il est également possible de déterminer l'amplitude de relaxation sous charge déterminée, c'est-à-dire la distance dont s'écartent les mâchoires, sous l'action de la cigarette, qui a tendance à reprendre sa forme, lorsque la force qui lui est appliquée se trouve brusquement réduite.

Naturellement, il est possible de changer la forme de la mâchoire frontale 2, ou fouloir, pour appliquer la force d'une manière non uniforme, pour mieux simuler la pression des doigts d'un fumeur, par exemple, si cela est jugé nécessaire.

De même, le nombre des orifices aspirants 33 dans la première mâchoire 3 peut évidemment être quelconque. Notamment, il peut n'y avoir qu'un unique orifice aspirant 33, du moment qu'il est dimensionné pour immobiliser la cigarette, ou l'article à mesurer, quelle que soit son orientation.

Dans la description qui vient d'être faite, le capteur de force 5 est monté sur le fouloir 2 mobile. Ceci n'est pas obligatoire, et la capteur de force 5 peut être monté sur la première mâchoire 3, fixe. De même, la capteur de force utilisé ici est tel que sa déformation, lorsqu'il est soumis à une force, est pratiquement nulle. Il en résulte que, pour mesurer le déplacement relatif des mâchoires 2 et 3, on peut considérer que la position de la mâchoire frontale 2 est la position de la plaque frontale 21, et mesurer le déplacement relatif entre la plaque frontale 21 et la première mâchoire 3. Si on utilise un capteur dont la déflexion varie de façon notable, il faut mesurer effectivement le déplacement relatif des mâchoires.

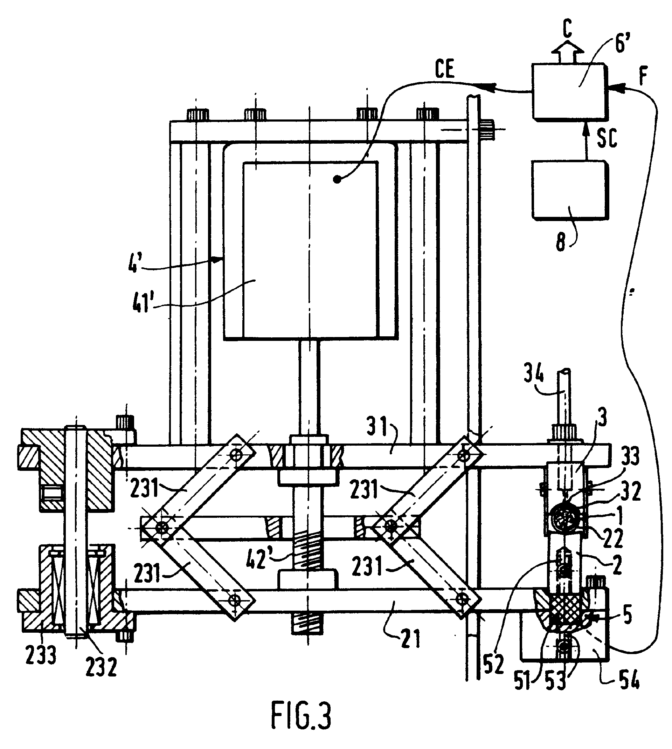

Comme le montre la figure 3, on peut aussi remplacer l'électro-aimant 4 par un moteur pas à pas 4', pourvu d'un corps 41' et d'un arbre de sortie 42', fileté, pour coopérer avec un trou taraudé de la plaque frontale 21. Dans ce cas, le capteur de déplacement 7 peut être supprimé. Un circuit électronique 6', qui remplace le circuit électronique 6, est agencé pour compter les pas du moteur 4, et calculer le déplacement relatif des mâchoires 2 et 3 qui en résulte, dans le cas où la déformation du capteur de force 5 est négligeable. Si tel n'est pas le cas, la courbe de la déformation du capteur de force 5, en fonction de la force qui lui est appliquée, est mémorisée dans le circuit 6', qui peut ainsi, en réponse au signal F, déterminer la déformation du capteur de force 5 et en tenir compte pour la calcul du déplacement relatif des mâchoires 2 et 3.

Le dispositif de l'invention peut aussi être utilisé pour déterminer l'épaisseur de l'objet. Dans ce cas, après avoir fait une mesure de référence avec un objet d'épaisseur calibrée, on déplace la mâchoire mobile jusqu'à ce que l'on détecte l'application, à l'objet à mesurer, d'une force de valeur suffisamment faible pour ne pas le déformer, on arrête le déplacement de la mâchoire mobile, pour déterminer sa position à l'aide du capteur de déplacement et en déduire la valeur de l'épaisseur.

Naturellement, bien que la description précédente soit relative à un dispositif dans lequel les mâchoires sont entraînées par un organe moteur commandé en réponse à la force d'écrasement mesurée, il est possible de prévoir un ou plusieurs orifices aspirants sur un dispositif où le déplacement relatif résulte de l'application du poids d'une masse calibrée, par exemple.

Enfin, si le dispositif de l'invention s'avère particulièrement utile dans le domaine des tabacs et cigarettes, il trouve également son application dans de nombreux domaines, et au prix d'adaptations évidentes pour l'homme de métier, pour la mesure de la compacité ou de la dureté de tous types de matériaux.

## Revendications

1. Dispositif de mesure de la compacité d'un objet (1) déformable, comprenant :
   – une paire de mâchoires (2,3) entre lesquelles est maintenu ledit objet (1),
   – des moyens (4,5,6;4',5,6') pour écraser, par l'intermédiaire desdites mâchoires (2,3) et sous l'action d'une force calibrée, ledit objet (1), et,
   – des moyens (7;6') de détermination du déplacement relatif desdites mâchoires (2,3) qui résulte de l'écrasement dudit objet (1), et représentatif de la compacité à mesurer,
   dispositif caractérisé par le fait qu'une (3) desdites mâchoires (2,3) est pourvue d'au moins un orifice aspirant (33) pour immobiliser ledit objet (1) quelle que soit son orientation.

2. Dispositif selon la revendication dans lequel lesdits moyens d'écrasement comprennent :
   – des moyens (4;4') commandables d'entraînement d'une (2) desdites mâchoires en déplacement relatif par rapport à l'autre (3),
   – des moyens (5) de mesure de la force appliquée audit objet (1), et,
   – des moyens de commande (6;6') desdits moyens d'entraînement (4;4') en réponse auxdits moyens (5) de mesure de la force, agencés pour que celle-ci reste à tout instant égale à une valeur de consigne calibrée.

3. Dispositif selon la revendication 2, dans lequel lesdits moyens de mesure de la force comprennent un capteur de force (5) qui supporte une (2) desdites mâchoires (2,3).

4. Dispositif selon l'une des revendications 2 ou 3, dans lequel lesdits moyens d'entraînement comprennent un électro-aimant (4) à commande proportionnelle, pourvu d'une tige mobile (42) rappelée par un ressort (43).

5. Dispositif selon l'une des revendications 1 à 4, dans lequel lesdits moyens de détermination du déplacement relatif comprennent un capteur (7) de mesure dudit déplacement relatif.

6. Dispositif selon l'une des revendications 2 ou 3, dans lequel lesdits moyens d'entraînement comprennent un moteur pas à pas (4').

7. Dispositif selon la revendication 6, dans lequel lesdits moyens de détermination du déplacement relatif comprennent un capteur (7) de mesure dudit déplacement relatif.

8. Dispositif selon la revendication 6, dans lequel lesdits moyens de détermination du déplacement relatif comprennent des moyens (6') pour compter les pas dudit moteur (4'), pour déterminer, le cas échéant, la déformation desdits moyens (5) de mesure de la force, et pour calculer ledit déplacement relatif.

**Patentansprüche**

1. Vorrichtung zur Messung der Festigkeit eines verformbaren Gegenstandes (1), die umfaßt:
   – ein Paar Klemmbacken (2, 3), zwischen denen der Gegenstand (1) gehalten wird,
   – Mittel (4, 5, 6; 4', 5, 6') zum Zerdrücken des Gegenstandes (1) mittels dieser Klemmbacken (2, 3) und unter der Einwirkung einer kalibrierten Kraft und
   – Mittel (7; 6') zur Bestimmung der relativen Verschiebung dieser Klemmbacken (2, 3), die sich aus dem Zerdrücken des Gegenstandes (1) ergibt und die der zu messenden Festigkeit entspricht,
   Vorrichtung, dadurch gekennzeichnet, daß eine (3) der Klemmbacken (2, 3) mit mindestens einer Ansaugöffnung (33) versehen ist, um den Gegenstand (1) in einer beliebigen Lage festzuhalten.

2. Vorrichtung nach Anspruch 1, bei der die Mittel zum Zerdrücken umfassen:
   – steuerbare Mittel (4; 4') zum Antrieb einer (2) dieser Klemmbacken in einer in bezug auf die andere Klemmbacke (3) relativen Verschiebung,
   – Mittel (5) zur Messung der auf den Gegenstand (1) angewendeten Kraft und
   – Mittel zur Steuerung (6; 6') dieser Antriebsmittel (4, 4') in Antwort auf die Mittel (5) zur Kraftmessung, so daß die Kraft zu jedem Zeitpunkt mit einem kalibrierten Sollwert übereinstimmt.

3. Vorrichtung nach Anspruch 2, bei der die Mittel zur Messung der Kraft einen Kraftsensor (5) umfassen, der eine (2) der Klemmbacken (2, 3) trägt.

4. Vorrichtung nach einem der Ansprüche 2 oder 3, bei der die Mittel zum Antrieb einen Elektromagneten (4) mit Proportional-Regelung umfassen, der mit einer verschiebbaren Stange (42) versehen ist, die mittels einer Feder (43) rückgestellt wird.

5. Vorrichtung nach einem der Ansprüche 1 bis 4, bei der die Mittel zur Bestimmung der relativen Verschiebung einen Sensor (7) zur Messung dieser relativen Verschiebung umfassen.

6. Vorrichtung nach einem der Ansprüche 2 oder 3, bei der die Mittel zum Antrieb einen Schrittmotor (4') umfassen.

7. Vorrichtung nach Anspruch 6, bei der die Mittel zur Bestimmung der relativen Verschiebung einen Sensor (7) zur Messung dieser relativen Verschiebung umfassen.

8. Vorrichtung nach Anspruch 6, bei der die Mittel zur Bestimmung der relativen Verschiebung Mittel (6') zum Zählen der Schritte des Motors (4') und - gegebenfalls - zur Bestimmung der Verformung der Mittel (5) zur Kraftmessung und zur Berechnung der relativen Verschiebung umfassen.

**Claims**

1. A device for measuring the compactness of a deformable object (1), comprising:
   – a pair of jaws (2,3) between which said object (1) is held,
   – means (4,5,6; 4',5',6') for compressing by means of said jaws (2,3), and under the action of a calibrated force, said object (1), and
   – means (7; 6') for determining the relative displacement of said jaws (2,3) resulting from the compression of said object (1), and representing the compactness to be measured,
   the device characterised by the fact that one (3) of said jaws (2,3) is provided with at least one suction orifice (33) for firmly holding said object (1) whatever its orientation.

2. A device as claimed in claim 1, in which said means of compression comprises:
   – controllable means (4; 4') for actuating one (2) of said jaws, displacing it relative to the other (3),
   – means (5) for measuring the force applied to said object (1), and
   – means (6; 6') for controlling said means of actuation (4; 4') in response to said means (5) for measuring the force, arranged so that the force at all times remains equal to a calibrated reference value.

3. A device as claimed in claim 2, in which said means of measuring the force comprises a force sensor (5) supporting one (2) of said jaws (2,3).

4. A device as claimed in either of claims 2 or 3, in which said means of actuation incorporates a proportioning control electromagnet (4), provided with a moveable rod (42) with a return spring (43).

5. A device as claimed in any one of claims 1 to 4, in which said means for determining the relative movement comprises a sensor (7) for measuring said relative movement.

6. A device as claimed in either of claims 2 or 3, in which said means of actuation comprises a stepping motor (4′).

7. A device as claimed in claim 6, in which said means for determining the relative movement comprises a sensor (7) for measuring said relative displacement.

8. A device as claimed in claim 6, in which said means for determining the relative displacement comprises means (6′) for counting the steps of said motor (4′), for determining, when appropriate, the deformation of said means (5) for measuring the force, and for calculating said relative displacement.

FIG.2

FIG.1

FIG.3